# EUROPÄISCHE PATENTANMELDUNG

(11) **EP 1 277 609 A2**
(43) Veröffentlichungstag der Anmeldung: **22.01.2003**
(21) Anmeldenummer: 02012838.5
(22) Anmeldetag: 10.06.2002
(51) Int. Cl.: B60K 15/077

(54) **Kraftstoffbehälter für ein Kraftfahrzeug**

(30) Priorität: 17.07.2001 DE 10133967
(71) Anmelder: SIEMENS AKTIENGESELLSCHAFT, 80333 München (DE)
(72) Erfinder: Eck, Karl, 60318 Frankfurt (DE); Sinz, Wolfgang, 65843 Sulzbach (DE)

(57) **Zusammenfassung**

In einem Kraftstoffbehälter (1) für ein Kraftfahrzeug ist ein Zwischenbehälter (6) zur Zwischenspeicherung von über mehrere Saugstrahlpumpen (9, 10) gefördertem Kraftstoff angeordnet. Der Zwischenspeicher (6) verteilt den Kraftstoff auf mehrere Fördereinheiten (4, 5) aufweisende Schwalltöpfe (2, 3). Hierdurch wird ein Trockenlaufen einer der Fördereinheiten (4, 5) bei Querbeschleunigungen des Kraftstoffbehälters (1) verhindert.

## Beschreibung

Die Erfindung betrifft einen Kraftstoffbehälter für ein Kraftfahrzeug mit einer zur Ansaugung von Kraftstoff aus einem Schwalltopf vorgesehenen Fördereinheit, mit einer Saugstrahlpumpe zur Förderung von Kraftstoff in den Schwalltopf.

Solche Kraftstoffbehälter werden in heutigen Kraftfahrzeugen häufig eingesetzt und sind aus der Praxis bekannt. Hierbei dient die Saugstrahlpumpe in der Regel zur Förderung von Kraftstoff aus einer von dem Schwalltopf entfernten Kammer. Hierdurch soll bei nahezu leerem Kraftstoffbehälter eine ständige Füllung des Schwalltopfes mit Kraftstoff sichergestellt werden. Eine Entleerung des Schwalltopfes kann zu einem Trockenlaufen der Fördereinheit und damit zu deren Zerstörung führen.

Nachteilig ist jedoch, dass heutige Kraftstoffbehälter häufig sehr flach und breit gestaltet sind. Daher ist der Schwalltopf meist sehr niedrig. Bei Kurvenfahrt des Kraftfahrzeuges besteht daher die Gefahr, dass Kraftstoff aus der die Saugstrahlpumpe aufweisenden Kammer abfließt und die Förderung der Saugstahlpumpe ausbleibt. Der Schwalltopf kann sich daher schnell entleeren.

Der Erfindung liegt das Problem zugrunde, einen Kraftstoffbehälter der eingangs genannten Art so zu gestalten, dass ein Trockenlaufen der Fördereinheit zuverlässig vermieden wird.

Dieses Problem wird erfindungsgemäß dadurch gelöst, dass zwischen der Saugstrahlpumpe und dem Schwalltopf ein Zwischenbehälter angeordnet ist, wobei der Zwischenbehälter zur Zwischenspeicherung des von der Saugstrahlpumpe geförderten Kraftstoffs und zur Leitung des Kraftstoffs in den Schwalltopf ausgebildet ist.

Durch diese Gestaltung wird zunächst der Zwischenbehälter mit Kraftstoff befüllt. Dieser Kraftstoff strömt anschließend in den Schalltopf. Daher lässt sich auch bei sehr kleinen Schwalltöpfen deren ständige Füllung mit Kraftstoff sicherstellen. Ein Trockenlaufen der Fördereinheit lässt sich dank der Erfindung zuverlässig vermeiden.

Häufig werden bei Kraftfahrzeugen mit leistungsstarken Brennkraftmaschinen mehrere Fördereinheiten in entsprechend vielen Schwalltöpfen eingesetzt. Hierdurch werden Spitzenverbräuche der Brennkraftmaschine abgedeckt. Die Fördereinheiten versorgen jeweils eine in entlegenen Bereichen des Kraftstoffbehälters angeordnete Saugstrahlpumpe. Bei dem aus der Praxis bekannten Kraftstoffbehälter dient jede der Saugstrahlpumpen zur Befüllung einer der Schwalltöpfe. Diese Gestaltung führt jedoch dazu, dass eine der Fördereinheiten trockenläuft, wenn die dazugehörige Saugstrahlpumpe nicht mehr mit Kraftstoff bedeckt ist. Man könnte daran denken, jede der Saugstrahlpumpen mit einem Zwischenbehälter zu verbinden. Zur weiteren Erhöhung der Zuverlässigkeit der Versorgung der Fördereinheiten mit Kraftstoff trägt es jedoch gemäß einer vorteilhaften Weiterbildung der Erfindung bei, wenn mehrere Schwalltöpfe und Saugstrahlpumpen jeweils mit einem gemeinsamen Zwischenbehälter verbunden sind. Durch diese Gestaltung kann eine nahezu beliebige Anzahl von Saugstrahlpumpen in verschiedenen Kammern des erfindungsgemäßen Kraftstoffbehälters verteilt angeordnet sein. Der Zusatzbehälter wird ständig mit Kraftstoff befüllt, wenn wenigstens eine der Saugstrahlpumpen mit Kraftstoff bedeckt ist. Die Verbindung des Zwischenbehälters mit allen Schwalltöpfen, in denen Fördereinheiten angeordnet sind, stellt sicher, dass die Fördereinheiten ständig mit Kraftstoff versorgt werden. Daher führt ein Auftauchen einer Saugstrahlpumpe oder einiger weniger Saugstrahlpumpen nicht zu einer Unterbrechung der Befüllung des Zwischenbehälters und damit der Schwalltöpfe.

Eine ständige Befüllung aller Schwalltöpfe lässt sich gemäß einer anderen vorteilhaften Weiterbildung der Erfindung einfach sicherstellen, wenn der Zwischenbehälter oberhalb der Schwalltöpfe angeordnet ist.

Der Zwischenbehälter könnte beispielsweise nach oben hin offen sein, so dass er überlaufen kann. Eine unnötige Umwälzung von über die Saugstrahlpumpen gefördertem Kraftstoff lässt sich jedoch gemäß einer anderen vorteilhaften Weiterbildung der Erfindung einfach durch Mittel zur Erzeugung eines vorgesehenen Staudrucks in dem Zwischenbehälter in Abhängigkeit von dessen Füllstand vermeiden. Hierdurch wird die Saugstrahlpumpenleistung durch den Staudruck geregelt, so dass sich bei gefülltem Zwischenbehälter dessen weitere Befüllung vermeiden lässt. Die hierdurch vermiedene Umwälzung führt zu einer besonders geringen Permeation des erfindungsgemäßen Kraftstoffbehälters.

Die Mittel zur Erzeugung eines vorgesehenen Staudrucks gestalten sich gemäß einer vorteilhaften Weiterbildung der Erfindung konstruktiv besonders einfach, wenn der Zwischenbehälter geschlossen ist und wenn ein Überlauf des Zwischenbehälters eine Drossel hat. Die Drossel kann nahezu beliebig gestaltet sein und bei einem vorgesehenen Druck automatisch den Überlauf schalten oder ausschließlich bei in dem oberen Bereich des Zwischenbehälters befindlicher Luft offen sein und sich bei Kontakt mit Kraftstoff schließen. Über die Drossel lässt sich der Zwischenbehälter daher zudem entlüften.

Eine vollkommen verschleißfreie Steuerung der Leistung der Saugstrahlpumpe oder der Saugstrahlpumpen lässt sich gemäß einer anderen vorteilhaften Weiterbildung der Erfindung einfach erzeugen, wenn eine Zuleitung für den von der Saugstrahlpumpe oder den Saugstrahlpumpen geförderten Kraftstoff im unteren Bereich des Zwischenbehälters angeordnet ist. Hierdurch steigt der Staudruck proportional zum Füllstand im Zwischenbehälter.

Bei Querbeschleunigungen des erfindungsgemäßen Kraftstoffbehälters wird eine Befüllung der Schwalltöpfe besonders zuverlässig sichergestellt, wenn zu den Schwalltöpfen führende Ableitungen im unteren Bereich des Zwischenbehälters angeordnet sind. Bei besonders stark verwinkelten erfindungsgemäßen Kraftstoffbehältern und den einen Staudruck aufweisenden Zwischenbehältern lässt sich eine Führung von Kraftstoff aus dem Zwischenbehälter in die Schwalltöpfe auch gegen Kräfte der Querbeschleunigungen sicherstellen, wenn in den zu den Schwalltöpfen führenden Ableitungen Drosseln und/oder Rückschlagventile angeordnet sind.

Die Schwalltöpfe werden gemäß einer anderen vorteilhaften Weiterbildung der Erfindung auch bei nahezu leerem Zwischenbehälter mit Kraftstoff befüllt, wenn der untere Bereich des Zwischenbehälters trichterförmig gestaltet ist.

Im Bodenbereich des Zwischenbehälters an den Ableitungen zu den Schwalltöpfen wird ständig eine für die Schwalltöpfe ausreichende Menge an Kraftstoff gesammelt, wenn ein Winkel α des trichterförmigen Bereichs der Wandung zum Querschnitt des Zwischenbehälters gleich dem Arkustangens der Querbeschleunigung zur Erdbeschleunigung beträgt.

Der erfindungsgemäße Kraftstoffbehälter gestaltet sich konstruktiv besonders einfach, wenn der Überlauf des Zwischenbehälters ein den trichterförmigen Bereich der Wandung durchdringendes Rohr hat und wenn das Rohr mit zumindest einem der Schwalltöpfe verbunden ist.

Zur weiteren Verminderung der Umwälzung des Kraftstoffs trägt es gemäß einer anderen vorteilhaften Weiterbildung der Erfindung bei, wenn eine Rücklaufleitung einer Brennkraftmaschine des Kraftfahrzeuges in den Zwischenbehälter geführt ist.

Zur weiteren Verminderung der Umwälzung des Kraftstoffs und damit zur Verringerung der Permeation an Kraftstoff durch die Wandung des erfindungsgemäßen Kraftstoffbehälters tragen Mittel zur Erzeugung eines vorgesehenen Staudrucks in dem Schwalltopf oder den Schwalltöpfen bei.

Die Anzahl der innerhalb des Kraftstoffbehälters zu verlegenden Leitungen lässt sich besonders gering halten, wenn mehrere Fördereinheiten einen gemeinsamen Verteiler für zu den Saugstrahlpumpen führende Leitungen und einer zu der Brennkraftmaschine führenden Vorlaufleitung haben.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: schematisch eine Schnittdarstellung durch einen erfindungsgemäßen Kraftstoffbehälter,
- Fig.2: eine stark vergrößerte Schnittdarstellung eines Zwischenbehälters des Kraftstoffbehälters aus Figur 1.

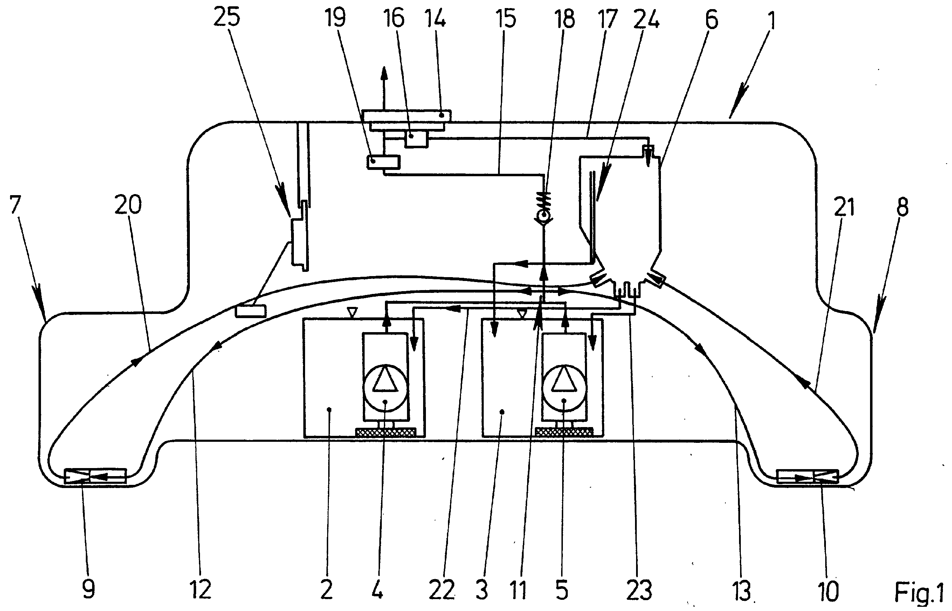

Figur 1 zeigt eine Schnittdarstellung durch einen Kraftstoffbehälter 1 für ein Kraftfahrzeug mit zwei jeweils in einem Schwalltopf 2, 3 angeordneten Fördereinheiten 4, 5. Oberhalb der Schwalltöpfe 2, 3 ist ein Zwischenbehälter 6 angeordnet. Der Kraftstoffbehälter 1 hat in seinen äußeren Bereichen jeweils eine Kammer 7, 8 mit darin angeordneten Saugstrahlpumpen 9, 10. Die Fördereinheiten 4, 5 fördern Kraftstoff aus den Schwalltöpfen 2, 3 zu einem gemeinsamen Verteiler 11. An dem Verteiler 11 sind zu den Saugstrahlpumpen 9, 10 führende Leitungen 12, 13 und eine durch einen Flansch 14 zu einer nicht dargestellten Brennkraftmaschine des Kraftfahrzeuges geführte Vorlaufleitung 15 angeschlossen. Der Flansch 14 des Kraftstoffbehälters 1 haltert einen Druckregler 16. Oberhalb eines vorgesehenen Drucks in der Vorlaufleitung 15 öffnet sich der Druckregler 16 und führt Kraftstoff über eine Rücklaufleitung 17 in den Zwischenbehälter 6. Weiterhin sind in der Vorlaufleitung 15 ein Rückschlagventil 18 und ein Kraftstofffilter 19 angeordnet. Der Zwischenbehälter 6 wird über mit den Saugstrahlpumpen 9, 10 verbundenen Zuleitungen 20 ,21 mit Kraftstoff befüllt. Von dem Zwischenbehälter 6 führen Ableitungen 22, 23 zu den Schwalltöpfen 2, 3. Zur Verdeutlichung sind in der Zeichnung die Strömungen des Kraftstoffs mit Pfeilen gekennzeichnet. Der Zwischenbehälter 6 hat zudem einen mit einem der Schwalltöpfe 3 verbundenen Überlauf 24. Weiterhin zeigt Figur 1, dass innerhalb des Kraftstoffbehälters 1 ein Vorratsgeber 25 angeordnet ist.

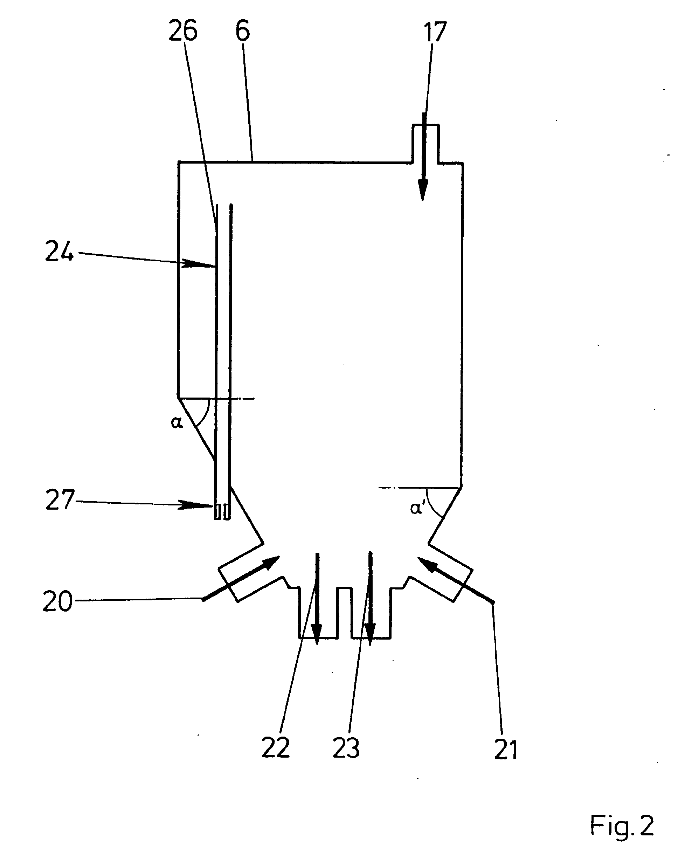

Figur 2 zeigt den Zwischenbehälter 6 aus Figur 1 in einer stark vergrößerten Schnittdarstellung. Hierbei erkennt man, dass der Überlauf 24 des Zwischenbehälters 6 ein Rohr 26 aufweist. Das Rohr 26 durchdringt einen trichterförmig gestalteten Bodenbereich des Zwischenbehälters 6 und hat eine Drossel 27. Ein Winkel α des trichterförmigen Bereichs der Wandung zu dem Querschnitt des Zwischenbehälters 6 beträgt z. B. 60° für Querbeschleunigungen von 1,7 g.

## Patentansprüche

1. Kraftstoffbehälter für ein Kraftfahrzeug mit einer zur Ansaugung von Kraftstoff aus einem Schwalltopf vorgesehenen Fördereinheit, mit einer Saugstrahlpumpe zur Förderung von Kraftstoff in den Schwalltopf, **dadurch gekennzeichnet, dass** zwischen der Saugstrahlpumpe (9, 10) und dem Schwalltopf (2, 3) ein Zwischenbehälter (6) angeordnet ist, wobei der Zwischenbehälter (6) zur Zwischenspeicherung des von der Saugstrahlpumpe (9, 10) geförderten Kraftstoffs und zur Leitung des Kraftstoffs in den Schwalltopf (2, 3) ausgebildet ist.

2. Kraftstoffbehälter nach Anspruch 1, **dadurch gekennzeichnet, dass** mehrere Schwalltöpfe (2, 3) und Saugstrahlpumpen (9, 10) jeweils mit einem gemeinsamen Zwischenbehälter (6) verbunden sind.

3. Kraftstoffbehälter nach Anspruch 1 oder 2, **dadurch gekennzeichnet, dass** der Zwischenbehälter (6) oberhalb der Schwalltöpfe (2, 3) angeordnet ist.

4. Kraftstoffbehälter nach zumindest einem der vorhergehenden Ansprüche, **gekennzeichnet durch** Mittel zur Erzeugung eines vorgesehenen Staudrucks in dem Zwischenbehälter (6) in Abhängigkeit von dessen Füllstand.

5. Kraftstoffbehälter nach zumindest einem der vorhergehenden Ansprüche, **dadurch gekennzeichnet, dass** der Zwischenbehälter (6) geschlossen ist und dass ein Überlauf (24) des Zwischenbehälters (6) eine Drossel (27) hat.

6. Kraftstoffbehälter nach zumindest einem der vorhergehenden Ansprüche, **dadurch gekennzeichnet, dass** eine Zuleitung (20, 21) für den von der Saugstrahlpumpe oder den Saugstrahlpumpen (9, 10) geförderten Kraftstoff im unteren Bereich des Zwischenbehälters (6) angeordnet ist.

7. Kraftstoffbehälter nach zumindest einem der vorhergehenden Ansprüche, **dadurch gekennzeichnet, dass** zu den Schwalltöpfen (9, 10) führende Ableitungen (22, 23) im unteren Bereich des Zwischenbehälters (6) angeordnet sind.

8. Kraftstoffbehälter nach zumindest einem der vorhergehenden Ansprüche, **dadurch gekennzeichnet, dass** der untere Bereich des Zwischenbehälters (6) trichterförmig gestaltet ist.

9. Kraftstoffbehälter nach zumindest einem der vorhergehenden Ansprüche, **dadurch gekennzeichnet, dass** ein Winkel α des trichterförmigen Bereichs der Wandung zum Querschnitt des Zwischenbehälters (6) gleich dem Arkustangens von Querbeschleunigung zu Erdbeschleunigung, vorzugsweise 60°, ist.

10. Kraftstoffbehälter nach zumindest einem der vorhergehenden Ansprüche, **dadurch gekennzeichnet, dass** der Überlauf (24) des Zwischenbehälters (6) ein den trichterförmigen Bereich der Wandung durchdringendes Rohr (26) hat und dass das Rohr (26) mit zumindest einem der Schwalltöpfe (3) verbunden ist.

11. Kraftstoffbehälter nach zumindest einem der vorhergehenden Ansprüche, **dadurch gekennzeichnet, dass** eine Rücklaufleitung (17) einer Brennkraftmaschine des Kraftfahrzeuges in den Zwischenbehälter (6) geführt ist.

12. Kraftstoffbehälter nach zumindest einem der vorhergehenden Ansprüche, **gekennzeichnet durch** Mittel zur Erzeugung eines vorgesehenen Staudrucks in dem Schwalltopf oder den Schwalltöpfen (2, 3).

13. Kraftstoffbehälter nach zumindest einem der vorhergehenden Ansprüche, **dadurch gekennzeichnet, dass** mehrere Fördereinheiten (4, 5) einen gemeinsamen Verteiler (11) für zu den Saugstrahlpumpen (9, 10) führende Leitungen (12, 13) und einer zu der Brennkraftmaschine führenden Vorlaufleitung (15) haben.
